# EUROPEAN PATENT SPECIFICATION

(11) **EP 4 254 578 B1**
(45) Date of publication and mention of the grant of the patent: **29.04.2026**
(21) Application number: 22820434.3
(22) Date of filing: 18.05.2022
(51) Int. Cl.: H01M 50/609, H01M 50/107, H01M 10/04, B01F 31/60, B01F 29/32, B01F 29/33

(54) **ELECTROLYTE IMPREGNATION DEVICE**
ELEKTROLYTIMPRÄGNIERVORRICHTUNG
DISPOSITIF D'IMPRÉGNATION D'ÉLECTROLYTE

(30) Priority: 09.06.2021 KR 20210075061
(43) Date of publication of application: 04.10.2023
(73) Proprietor: LG Energy Solution, Ltd., Seoul 07335 (KR)
(72) Inventor: LEE, Myung-An, Daejeon 34122 (KR); RYU, Duk-Hyun, Daejeon 34122 (KR)
(74) Representative: Goddar, Heinz J.
(86) International application number: PCT/KR2022/007142
(87) International publication number: WO 2022/260306

(56) References cited:
- EP-A1- 2 704 230
- JP-A- 2015 138 713
- JP-A- 2017 091 771
- JP-U- S5 539 675
- KR-A- 20110 032 848
- KR-A- 20170 088 034
- KR-B1- 100 246 114

## Description

### TECHNICAL FIELD

The present disclosure relates to an electrolyte impregnation device. A similar electrolyte impregnation device is known from KR 100 246 114 B1.

### BACKGROUND ART

Secondary batteries that have ease of application according to product groups and have electrical characteristics such as high energy density are universally applied not only to portable devices, but also to electric vehicles (EVs) or hybrid electric vehicles (HEVs) driven by an electric drive source. These secondary batteries are attracting attention as a new energy source for improving eco-friendliness and energy efficiency because they not only have the primary advantage of dramatically reducing the use of fossil fuels, but also do not generate any by-products from the use of energy.

Types of secondary batteries currently widely used include lithium-ion batteries, lithium polymer batteries, nickel cadmium batteries, nickel hydrogen batteries, nickel zinc batteries, and the like. Such a unit secondary battery cell, that is, a unit battery cell, has an operating voltage of about 2.5 V to 4.5 V. Therefore, when a higher output voltage is required, a battery pack may be configured by connecting a plurality of battery cells in series. In addition, a plurality of battery cells may be connected in parallel to form a battery pack according to the charge/discharge capacity required for the battery pack. Accordingly, the number of battery cells included in the battery pack may be variously set according to a required output voltage and/or charge/discharge capacity.

On the other hand, in general, in a secondary battery, electrolyte may be impregnated in an electrode assembly, so that lithium ions can smoothly move to generate an electric current. At this time, the electrolyte impregnation rate is a very important factor affecting the lifespan and capacity of the battery, and it is more advantageous as the electrolyte impregnation rate is higher.

On the other hand, there may be a limitation in completely impregnating the electrolyte in the entire electrode assembly by only vacuuming and pressurizing after injecting the electrolyte at an upper portion of the cylindrical battery cell. For example, the electrolyte impregnation rate may be different at the top and the bottom of the electrode assembly. More specifically, after the electrolyte is injected, there may be a case where the residual electrolyte is gathered in the lower portion of the cylindrical battery cell, and the electrolyte is not properly impregnated in the upper portion. Alternatively, since the gap between the positive electrode plate, the separator and the negative electrode plate constituting the electrode assembly is very narrow, the electrolyte injected through the top opening of the battery can may stay only in the upper portion of the battery can due to capillary action and may not be transmitted well to the lower portion of the battery can.

Therefore, it is required to find a way to allow an electrolyte to be uniformly impregnated into the entire electrode assembly of the cylindrical battery cell.

KR 100 246 114 B1 discloses an electrolyte impregnation device comprising four battery cell fixing devices, wherein each battery cell fixing device comprises a holder configured to be coupled to a cylindrical battery cell along an outer circumference of the cylindrical battery cell, wherein the electrolyte impregnation device further comprises a rotator configured to rotate the battery cell fixing devices based on a predetermined rotation axis.

### DISCLOSURE

### Technical Problem

The present disclosure is designed to solve the problems of the related art, and therefore the present disclosure is directed to improving an electrolyte impregnation rate of a cylindrical battery cell by uniformly impregnating an electrolyte into an entire electrode assembly accommodated inside the cylindrical battery cell.

Meanwhile, the present disclosure is also directed to providing an electrolyte impregnation device, which is compatible with various cylindrical battery cells by stably fixing various cylindrical battery cells, regardless of the appearance and size of the cylindrical battery cell.

However, the technical problems to be solved by the present disclosure are not limited to the above, and other problems not mentioned herein will be clearly understood by those skilled in the art from the following disclosure.

### Technical Solution

According to the invention, there is provided an electrolyte impregnation device according to claim 1, comprising at least one battery cell fixing device wherein the battery cell fixing device comprises a plurality of holder units configured to be coupled to a cylindrical battery cell along an outer circumference of the cylindrical battery cell, wherein each of the plurality of holder units includes: a holder body configured to cover a part of the outer circumference of the cylindrical battery cell; and a beading fixing unit configured to protrude toward the cylindrical battery cell from the holder body and to be inserted into a beading portion that is formed by pressing-in the outer circumference of the cylindrical battery cell, and wherein the electrolyte impregnation device further comprises a rotator configured to rotate the plurality of holder units based on a predetermined rotation axis.

The battery cell fixing device according to the invention further comprises a vibration source connecting unit provided on an outer surface of the holder body of at least one of the plurality of holder units and configured to be connected to a vibration source.

The battery cell fixing device may further comprise a holder fastening unit configured to couple neighboring holder units to each other.

The holder body may have an extended shape to have a height corresponding to a height of the cylindrical battery cell.

The holder body may have a shape extending along the outer circumference of the cylindrical battery cell.

The beading fixing unit may have a protruding length corresponding to a pressing-in depth of the beading portion.

The beading fixing unit has a shape extending along the outer circumference of the cylindrical battery cell.

The beading fixing unit may be configured to move along a radial direction of the cylindrical battery cell from the holder body and be fixed.

The beading fixing unit may be configured to be fixed in a state of being drawn by a length corresponding to a pressing-in depth of the beading portion of the cylindrical battery cell.

The holder fastening unit may be provided inside the holder body of each of the plurality of holder units.

The holder fastening unit may be configured to move in a direction of being drawn from the holder body and in a direction of being inserted into the holder body.

The holder fastening unit may be configured to move along a circumferential direction of the cylindrical battery cell.

The holder fastening unit may be provided to one side and the other side of the holder body, respectively.

The holder fastening units respectively provided to the neighboring holder units may be configured to be drawn toward each other and coupled to each other.

The electrolyte impregnation may further comprise a plurality of battery cell fixing devices, respectively configured to be coupled to a plurality of cylindrical battery cells.

The electrolyte impregnation device may further comprise a vibration source connected to the battery cell fixing device.

The vibration source may be provided as many as the number of the holder units provided in one battery cell fixing device.

The holder body may be disposed such that one end located close to an area where the beading portion is formed, among both ends of the cylindrical battery cell in a height direction, faces the rotation axis.

The rotation axis may be parallel to the ground.

The vibration source may be configured to be connected to the battery cell fixing device after the rotator stops driving.

The rotator may be configured to restart driving after the vibration source stops driving and the connection between the vibration source and the battery cell fixing device is released.

The plurality of battery cell fixing devices may be configured to be alternately connected to the vibration source.

The battery cell fixing device may be configured to be connected to the vibration source at a position where one end located close to an area where the beading portion is formed, among both ends of the cylindrical battery cell coupled to the battery cell fixing device in a height direction, faces the ground.

### Advantageous Effects

According to the present disclosure, an electrolyte may be uniformly impregnated into the entire electrode assembly accommodated in the cylindrical battery cell, and thus the electrolyte impregnation rate of the cylindrical battery cell may be improved.

In addition, according to the present disclosure, it is possible to stably fix various cylindrical battery cells regardless of the appearance and size of the cylindrical battery cells. Accordingly, the battery cell fixing device of the electrolyte impregnation device according to the present invention may be compatible with various cylindrical battery cells. In addition, since the battery cell fixing device may be closely attached to the cylindrical battery cell, vibration generated from the vibration source may be more effectively transmitted to the cylindrical battery cell.

In addition, the present disclosure may have various other effects, which will be described in each embodiment, or a corresponding description will be omitted for effects that can be easily inferred by a person skilled in the art.

### DESCRIPTION OF DRAWINGS

The accompanying drawings illustrate a preferred embodiment of the present disclosure and together with the foregoing disclosure, serve to provide further understanding of the technical features of the present disclosure, and thus, the present disclosure is not construed as being limited to the drawing.
FIG. 1 is a diagram for explaining a battery cell fixing device according to an embodiment of the present disclosure.
FIG. 2 and FIG. 3 are diagrams for explaining a process of coupling the battery cell fixing device of FIG. 1 and a battery cell.
FIG. 4 is a diagram for explaining a battery cell fixing device according to another embodiment of the present disclosure.
FIG. 5 is a diagram for explaining a connection relationship of the battery cell fixing device of FIG. 1 and a vibration source.
FIG. 6 is a diagram for explaining an electrolyte impregnation device including the battery cell fixing device of FIG. 1.

### BEST MODE

Hereinafter, preferred embodiments of the present disclosure will be described in detail with reference to the accompanying drawings. Prior to the description, it should be understood that the terms used in the specification and the appended claims should not be construed as limited to general and dictionary meanings, but interpreted based on the meanings and concepts corresponding to technical aspects of the present disclosure on the basis of the principle that the inventor is allowed to define terms appropriately for the best explanation.

Therefore, the embodiments disclosed in this specification and the configuration illustrated in the drawings are only one of the most preferred embodiments of the present disclosure and do not represent all the technical idea of the present disclosure, so it should be understood that other equivalents and modifications could be made thereto without departing from the scope of the claims.

In addition, in order to help understanding of the present disclosure, the accompanying drawings are not drawn to scale, but dimensions of some components may be exaggerated.

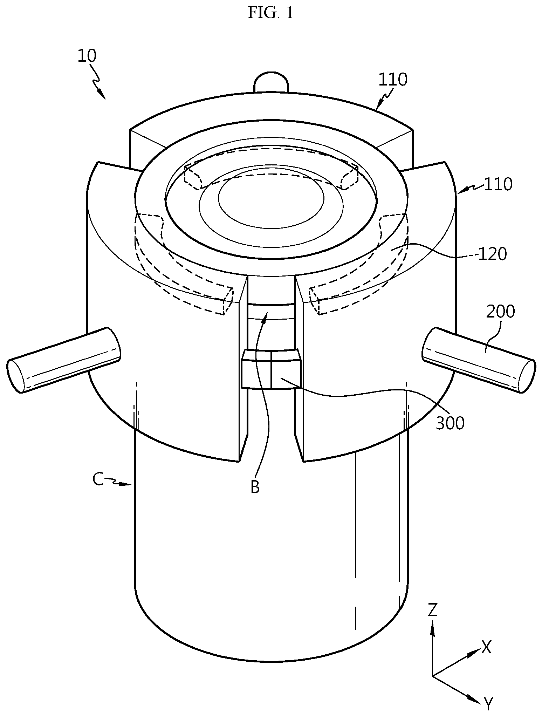

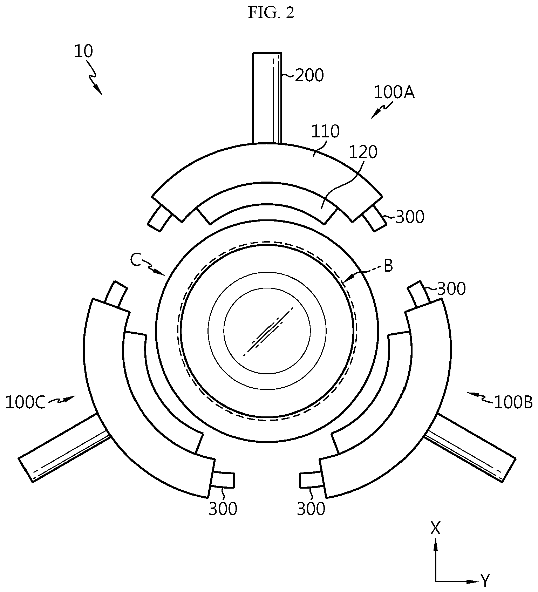

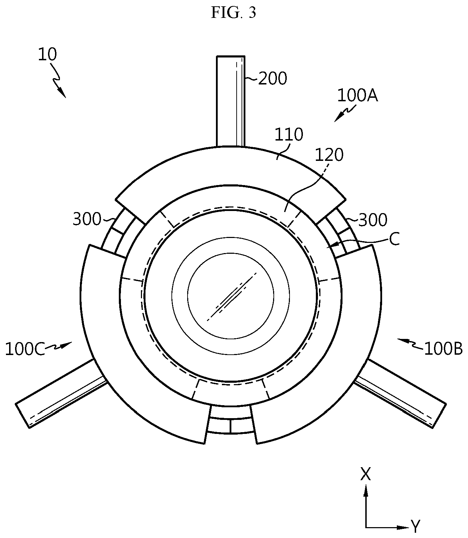

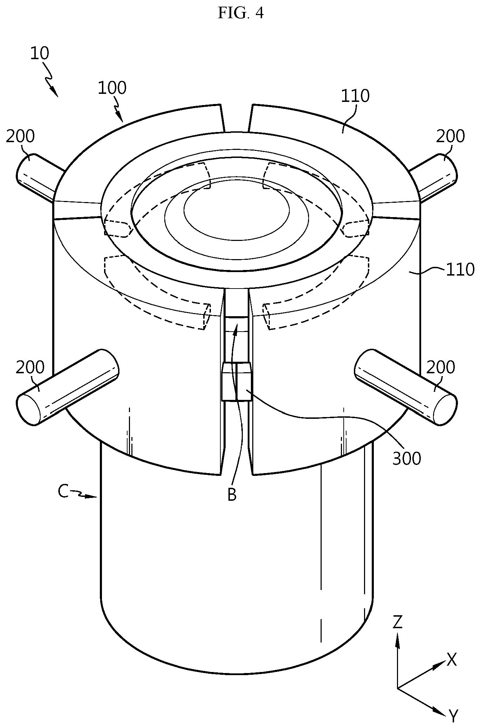

FIG. 1 is a diagram for explaining a battery cell fixing device according to an embodiment of the present disclosure, and FIG. 2 and FIG. 3 are diagrams for explaining a process of coupling the battery cell fixing device of FIG. 1 and a battery cell. Meanwhile, FIG. 4 is a diagram for explaining a battery cell fixing device according to another embodiment of the present disclosure.

Referring to FIGS. 1 to 3, a battery cell fixing device 10 according to an embodiment of the present disclosure includes a plurality of holder units 100 coupled to a cylindrical battery cell C along an outer circumference of the cylindrical battery cell C. Meanwhile, the battery cell fixing device 10 further includes a vibration source connecting unit 200 and may further include a holder fastening unit 300.

The holder unit 100 is provided in plurality. For example, as shown in FIG. 3, the battery cell fixing device 10 includes three holder units 100A, 100B, 100C. Since the battery cell fixing device 10 of the present disclosure includes a plurality of holder units 100, the battery cell fixing device 10 may be closely adhered to the cylindrical battery cell C even though the cylindrical battery cell C has slightly different shapes and/or sizes. For example, even if the cylindrical battery cell C has a relatively large diameter, the plurality of holder units 100 may cover the outer circumference of the cylindrical battery cell C while being spaced apart from each other by a predetermined distance along the circumferential direction of the cylindrical battery cell C.

On the other hand, as the number of holder units 100 increases, the effect of fixing the cylindrical battery cell C may be increased. For example, as shown in FIG. 4, in the battery cell fixing device 10 including four holder units 100, the fixing force of the cylindrical battery cell C may be further improved. In addition, as the number of holder units 100 increases, the range of shapes and/or sizes of the cylindrical battery cell C compatible with the battery cell fixing device 10 may be expanded.

The holder unit 100 includes a holder body 110 and a beading fixing unit 120.

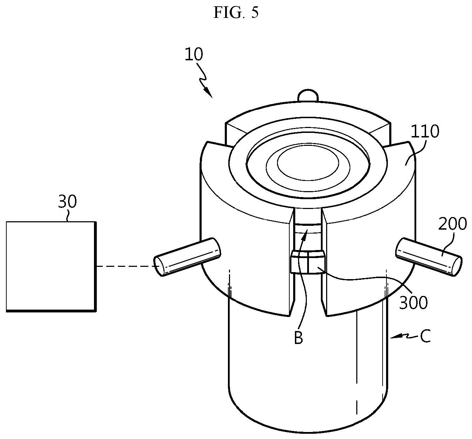

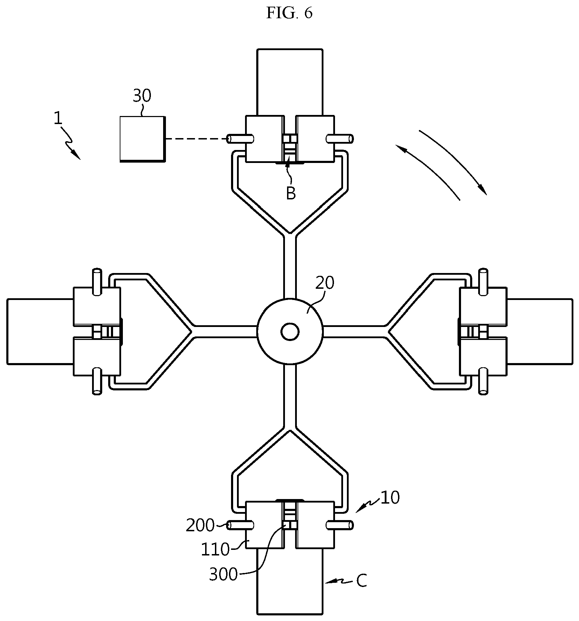

Referring to FIGS. 1 to 3, the holder body 110 is configured to cover a part of the outer circumference of the cylindrical battery cell C. The holder body 110 may have a shape extending along the outer circumference of the cylindrical battery cell C. An inner surface of the holder body 110 may have a curvature substantially similar to the curvature of the cylindrical battery cell C. Accordingly, the holder body 110 may be in close contact with the outer circumference of the cylindrical battery cell C. Accordingly, the vibration generated from a vibration source (refer to FIGS. 5 and 6) may be more efficiently transmitted to the cylindrical battery cell C.

The holder body 110 may have a shape that covers at least a partial area of the cylindrical battery cell C among the entire area in a height direction (parallel to the Z-axis). For example, referring to FIGS. 1 to 3, the holder body 110 may cover only a portion adjacent to an upper portion among the outer circumference of the cylindrical battery cell C in which a beading portion B is positioned. The beading portion B is formed by pressing-in the outer circumference of the battery can to a predetermined depth so that the electrode assembly (not shown) accommodated inside the battery can of the cylindrical battery cell C is not deviated to the outside of the battery can. In the present disclosure, the portion defined as an upper portion of the battery cell C means one end located close to the area where the beading portion B is formed, among both ends of the battery cell C in the height direction (parallel to the Z-axis).

Although not shown in the drawings, as another embodiment of the present disclosure, the holder body 110 may have an extended shape to have a height corresponding to the height of the cylindrical battery cell C. In this case, since the contact area of the holder body 110 with the cylindrical battery cell C is increased, external vibration may be more efficiently transmitted to the cylindrical battery cell C.

Referring to FIGS. 1 to 3, the beading fixing unit 120 may protrude toward the cylindrical battery cell C from the holder body 110. The beading fixing unit 120 may be inserted into the beading portion B of the cylindrical battery cell C to accurately fix the position of the cylindrical battery cell C in the height direction (parallel to the Z-axis). The protruding length of the beading fixing unit 120 may correspond to the pressing-in depth of the beading portion B. When the protruding length of the beading fixing unit 120 is substantially the same as the pressing-in depth of the beading portion B, the inner surface of the holder body 110 may be closely adhered to the outer circumference of the cylindrical battery cell C when the beading fixing unit 120 is inserted as deep as possible into the beading portion C. Accordingly, the fixing force of the cylindrical battery cell C may be maximized, and vibration by a vibration source 30, explained later, may be transmitted to the cylindrical battery cell C well.

Meanwhile, since the size of each cylindrical battery cell C may be somewhat different, the battery cell fixing device 10 of the present disclosure needs to be configured to universally firmly fix all of the cylindrical battery cells C having different sizes. Accordingly, the beading fixing unit 120 adopted in the battery cell fixing device 10 of the present disclosure may be configured to be moved from the holder body in a radial direction of the cylindrical battery cell C 110 and fixed. More specifically, the beading fixing unit 120 may be withdrawn from the holder body 110 in a sliding manner along the radial direction and fixed in the withdrawn state. For example, referring to FIG. 3, the beading fixing unit 120 may be withdrawn by a length corresponding to the pressed-in depth of the beading portion B of the cylindrical battery cell C to be coupled, and then fixed. Therefore, the present disclosure may be universally applied to cylindrical battery cells C having different sizes, and the positions of the cylindrical battery cells C in the height direction (parallel to the Z-axis) may be accurately fixed. As such, the battery cell fixing device 10 of the present disclosure has a structure capable of stably fixing the cylindrical battery cell C, so that processes for efficiently impregnating the electrolyte into the cylindrical battery cell C may be stably performed.

Referring to FIGS. 1 to 3, the vibration source connecting unit 200 is provided on the outer surface of the holder body 110 of at least one of the plurality of holder units 100 and connected to the vibration source 30. That is, the vibration source connecting unit 200 may function as a holder fastening unit that is provided to the holder body 110 and has a structure by which the vibration source 30 can be easily fastened to the holder body 110. For example, the vibration source connecting unit 200 may have a bar shape substantially perpendicular to the outer surface of the holder body 110. However, the vibration source connecting unit 200 is not limited to the bar shape, and any structure is possible as long as the external vibration source 30 can be properly connected to the holder body 110.

The vibration source connecting unit 200 may be provided to at least one of the plurality of holder units 100. For example, referring to FIGS. 1 to 3, the vibration source connecting unit 200 may be provided only to one holder unit 100 among three holder units 100, or may be provided only to two holder units 100. Of course, the vibration source connecting unit 200 may be provided to all of three holder units 100.

Referring to FIGS. 1 to 3, the holder fastening unit 300 may be configured to couple neighboring holder units 100 to each other. The holder fastening unit 300 may be provided in the holder body 110, for example. The holder fastening unit 300 may be configured to move in a direction of being withdrawn from the holder body 110 and a direction of being inserted into the holder body 110. The holder fastening unit 300 may be configured to move approximately along a circumferential direction of the cylindrical battery cell C.

The holder fastening unit 300 may be provided, for example, to one side and the other side of the holder body 110, respectively. The holder fastening units 300 respectively provided to the neighboring holder units 100 may be drawn out toward each other and coupled to each other. The mutual fastening method of the holder fastening units 300 provided to the neighboring holder units 100 is not limited, and, for example, the holder fastening units 300 may be configured to enable buckle coupling and/or hook coupling. Alternatively, a magnet may be provided at a terminal of each holder fastening unit 300, and when the neighboring holder units 100 come close to each other by a predetermined distance, the holder fastening units 300 may be fastened to each other by a magnetic force. In this way, by the holder fastening unit 300, the neighboring holder units 100 may be coupled to each other to constitute one battery cell fixing device 10. For example, when covering a cylindrical battery cell C having a relatively large diameter, the plurality of holder units 100 may be spaced apart from each other by a predetermined distance. In this case, the spacing between the plurality of holder units 100 may be different according to the circumferential length of the cylindrical battery cell C. According to the present disclosure, the holder fastening unit 300 is provided between a pair of holder units 100 whose holder bodies are spaced apart from each other and is configured to connect the pair of holder units 100, and accordingly, a cylindrical battery cell C having a relatively large diameter may also be covered by the battery cell fixing device 10 of the present disclosure.

FIG. 5 is a diagram for explaining a connection relationship of the battery cell fixing device of FIG. 1 and a vibration source, and FIG. 6 is a diagram for explaining an electrolyte impregnation device including the battery cell fixing device of FIG. 1.

Referring to FIGS. 5 and 6, an electrolyte impregnation device 1 according to the invention includes at least one battery cell fixing device 10 and a rotator 20. Meanwhile, the electrolyte impregnation device 1 may further include a vibration source 30.

In general, in a secondary battery, as an electrolyte is impregnated in the electrode assembly, lithium ions may smoothly move to generate an electric current. At this time, the electrolyte impregnation rate is a very important factor affecting the life and capacity of the battery, and the higher the electrolyte impregnation rate, the more advantageous.

On the other hand, there may be a limitation in completely impregnating the electrolyte in the entire electrode assembly by only vacuuming and pressurizing after injecting the electrolyte from an upper portion of the cylindrical battery cell C. For example, the electrolyte impregnation rate may be different at the top and the bottom of the electrode assembly. More specifically, after the electrolyte is injected, there may be a case where the residual electrolyte is gathered in the lower portion of the cylindrical battery cell C, and the electrolyte is not properly impregnated in the upper portion. Alternatively, since the gap between the positive electrode plate, the separator and the negative electrode plate constituting the electrode assembly is very narrow, the electrolyte injected through the top opening of the battery can may stay only in the upper portion of the battery can due to capillary action and may not be transmitted well to the lower portion of the battery can. Therefore, it is necessary to uniformly impregnate the electrolyte into the entire area of the electrode assembly by using a centrifugal force obtained by rotating the cylindrical battery cell C into which the electrolyte is injected. In addition, for more efficient electrolyte impregnation, vibration may be applied to the cylindrical battery cell C. To this end, the electrolyte impregnation device 1 according to an embodiment of the present disclosure may uniformly impregnate the electrolyte into the entire area of the electrode assemblies accommodated inside the plurality of cylindrical battery cells C by connecting the rotator 20 to the plurality of cylindrical battery cells C or by connecting both the rotator 20 and the vibration source 30 thereto. In particular, the electrolyte impregnation device 1 according to an embodiment of the present disclosure may include a plurality of battery cell fixing devices 10. Accordingly, the electrolyte impregnation rate of the plurality of cylindrical battery cells C may be simultaneously improved.

Referring to FIG. 6, the rotator 20 rotates the holder unit 100 based on a predetermined rotation axis. For example, as shown in FIG. 6, the rotator 20 may include a driving unit that drives around the rotation axis, and may include a plurality of connecting rods that approximately extend radially from the driving unit and grip the battery cell fixing device 10. However, it is not limited only to this shape. For example, the rotator 20 may include a circumferential frame having a predetermined radius around the predetermined rotation axis, and the circumferential frame may be connected to the driving unit by a predetermined connection unit.

Referring to FIG. 6, the rotator 20 may rotate in a clockwise direction and/or a counterclockwise direction. The rotator 20 may continuously rotate in a constant direction, or may rotate in the clockwise direction and then rotate in the counterclockwise direction after a predetermined number of rotations. For example, the rotator 20 may continuously rotate in the same direction like a water wheel, or the rotation direction may continuously change like a sandglass.

Referring to FIG. 6, the holder body 110 may be disposed such that an upper portion of the cylindrical battery cell C faces the rotation axis of the rotator 20. In this case, as the battery cell fixing device 10 and the cylindrical battery cell C rotate based on the rotation axis, centrifugal force is generated, and the electrolyte accommodated in the cylindrical battery cell C may move toward the lower portion of the cylindrical battery cell C by receiving the centrifugal force. Accordingly, the electrolyte staying only in the upper portion of the cylindrical battery cell C may move to the lower portion of the cylindrical battery cell C fast. Therefore, the electrolyte impregnation rate may increase as a whole in the cylindrical battery cell C.

Meanwhile, although not shown in the drawings, unlike the FIG. 6, the holder body 110 may be disposed such that a lower portion of the cylindrical battery cell C faces the rotation axis of the rotator 20. In this case, as the battery cell fixing device 10 and the cylindrical battery cell C rotate based on the rotation axis, centrifugal force is generated, and the electrolyte accommodated in the cylindrical battery cell C may move toward the upper portion of the cylindrical battery cell C by receiving the centrifugal force. Therefore, according to this arrangement, it is possible to improve the electrolyte impregnation rate when the residual electrolyte is gathered in the lower portion of the cylindrical battery cell C and the electrolyte is not properly impregnated into the upper portion after the electrolyte is injected.

Referring to FIG. 6, the rotation axis may be disposed to be approximately parallel to the ground. Accordingly, the plane of rotation of the rotator 20 may be approximately perpendicular to the ground. Accordingly, the cylindrical battery cell C coupled to the battery cell fixing device 10 connected to the rotator 20 may be in an inverted state during rotation. For example, referring to FIG. 6, the upper portion of the cylindrical battery cell C coupled to the battery cell fixing device 10 positioned at the uppermost portion of the rotator 20 faces the rotation axis. At this time, the cylindrical battery cell C may be in an inverted state. Meanwhile, the cylindrical battery cell C coupled to the battery cell fixing device 10 positioned at the lowermost portion of the rotator 20 may be in an upright state.

Referring to FIGS. 5 and 6, the vibration source 30 may be connected to the battery cell fixing device 10. In particular, the vibration source 30 may be connected to the vibration source connecting unit 200 of the battery cell fixing device 10. At this time, the vibration source 30 may be any source that generates vibration. For example, the vibration source 30 may be an ultrasonic generator or a facility capable of vertical/horizontal movement. Alternatively, the vibration source 30 may be an oscillator.

Although not shown in the drawings, the vibration source 30 may be provided as many as the number of the holder units 100 provided in one battery cell fixing device 10. Alternatively, the vibration source 30 may be provided in a number smaller than the number of the holder units 100 provided in one battery cell fixing device 10. Referring to FIGS. 5 and 6, the vibration source 30 may be connected to only one holder unit 100 among the plurality of holder units 100 provided in the corresponding battery cell fixing device 10.

Referring to FIG. 6, the vibration source 30 may be configured to be connected to the battery cell fixing device 10 after the rotator 20 stops driving. More specifically, the vibration source 30 may be connected to the battery cell fixing device 10 after the rotator 20 stops driving, and may be configured to be disconnected from the battery cell fixing device 10 before the rotator 20 restarts driving. In addition, the battery cell fixing device 10 may be configured to be connected to the vibration source 30 at a position where the upper portion of the cylindrical battery cell C coupled to the battery cell fixing device 10, namely one end located close to an area where the beading portion B is formed, among both ends of the battery cell C in the height direction, faces the ground. That is, the battery cell fixing device 10 may be connected to the vibration source 30 at a position in which the cylindrical battery cell C connected to the battery cell fixing device 10 is inverted.

For example, referring to FIG. 6, while the rotator 20 is rotating, the rotation may be temporarily stopped, and when the battery cell fixing device 10 is located at the uppermost portion of the rotator 20, the battery cell fixing device 10 may be connected to the vibration source 30. At this time, the electrolyte concentrated in the lower portion of the cylindrical battery cell C by the centrifugal force may receive the vibration generated by the vibration source 30 and flow down in the direction of gravity. Accordingly, the electrolyte may repeatedly move to one side and the other side along the height direction (parallel to the Z-axis) of the cylindrical battery cell C, and thus the entire area of the electrode assembly may be uniformly impregnated.

On the other hand, the vibration source 30 may be configured to be disconnected from the battery cell fixing device 10 after operating for a predetermined time. At this time, the rotator 20 may restart driving. Accordingly, the cylindrical battery cell C may receive centrifugal force due to rotation again.

The plurality of battery cell fixing devices 10 may be configured to be alternately connected to the vibration source 30. For example, referring to FIG. 6, the vibration source 30 may be configured to be connected to the battery cell fixing devices 10 only at to the upper portion of the rotator 20, namely a location farthest from the ground. By doing so, the plurality of battery cell fixing devices 10 that are rotating may be alternately connected to the vibration source 30.

On the other hand, for example, in the case of the electrolyte impregnation device 1 including four battery cell fixing devices 10 as shown in FIG. 6, when the driving stop cycle of the rotator 20 is 1 rotation, only one battery cell fixing device 10 is connected to the vibration source 30, and thus the impregnation rate may be different for each cylindrical battery cell C. Accordingly, the driving stop cycle of the rotator 20 may be, for example, 3/4 rotation. In this case, the rotator 20 is stopped after 3/4 rotation, and since the battery cell fixing device 10 located at the uppermost side is connected to the vibration source 30 at the time of stopping, all the battery cell fixing devices 10 may be alternately connected to the vibration source 30. However, the driving stop cycle of the rotator 20 is not limited thereto, and any cycle may be applied as long as all the battery cell fixing devices 10 included in the electrolyte impregnation device 1 can be alternately connected to the vibration source 30. As such, the electrolyte impregnation device 1 according to an embodiment of the present disclosure may be stably coupled with a plurality of cylindrical battery cells C and configured to rotate the battery cells C. Accordingly, the electrolyte impregnation device 1 may allow the electrolyte injected from the upper portion of the battery cell C to move smoothly to the lower portion of the battery cell C. Meanwhile, the electrolyte impregnation device 1 according to an embodiment of the present disclosure may be configured to apply vibration to the battery cell C. As a result, the electrolyte impregnation device 1 allows the electrolyte concentrated in the lower portion of the battery cell C to quickly move back to the upper portion as a centrifugal force is applied to the battery cell C due to the rotational motion of the battery cell 11, thereby uniformly impregnating the electrolyte into the entire area of the electrode assembly.

On the other hand, although terms indicating directions such as up and down are used in this specification, these terms are only for convenience of explanation, and it is obvious to those skilled in the art of the present disclosure that they may vary depending on the location of a target object or the location of an observer.

The present disclosure has been described in detail. However, it should be understood that the detailed description and specific examples, while indicating preferred embodiments of the disclosure, are given by way of illustration only, since various changes and modifications within the scope of the claims will become apparent to those skilled in the art from this detailed description.

### [Explanation of signs]

10 battery cell fixing device
100, 100A, 100B, 100C holder unit
110 holder body
120 beading fixing unit
200 vibration source connecting unit
300 holder fastening unit
20 rotator
30 vibration source
C battery cell
B beading portion

## Claims

1. An electrolyte impregnation device (1) comprising at least one battery cell fixing device (10), wherein the at least one battery cell fixing device (10) comprises:
a plurality of holder units (100, 100A, 100B, 100C) configured to be coupled to a cylindrical battery cell (C) along an outer circumference of the cylindrical battery cell (C),
wherein each of the plurality of holder units (100, 100A, 100B, 100C) includes:
a holder body (110) configured to cover a part of the outer circumference of the cylindrical battery cell (C); and
a beading fixing unit (120) configured to protrude toward the cylindrical battery cell (C) from the holder body (110) and to be inserted into a beading portion (B) that is formed by pressing-in the outer circumference of the cylindrical battery cell (C); and
a vibration source connecting unit (200) provided on an outer surface of the holder body (110) of at least one of the plurality of holder units (100, 100A, 100B, 100C) and configured to be connected to a vibration source (30);
wherein the electrolyte impregnation device (1) further comprises a rotator (20) configured to rotate the plurality of holder units (100, 100A, 100B, 100C) based on a predetermined rotation axis.

2. The electrolyte impregnation device according to claim 1, wherein the at least one battery cell fixing device (10) further comprises:
a holder fastening unit (300) configured to couple neighboring holder units (100, 100A, 100B, 100C) to each other.

3. The electrolyte impregnation device according to claim 1,
wherein the beading fixing unit (120) has a protruding length corresponding to a pressing-in depth of the beading portion (B).

4. The electrolyte impregnation device according to claim 1,
wherein the beading fixing unit (120) is configured to move along a radial direction of the cylindrical battery cell (C) from the holder body (110) and be fixed.

5. The electrolyte impregnation device according to claim 4, wherein the beading fixing unit (120) is configured to be fixed in a state of being drawn from the holder body (110) by a length corresponding to a pressing-in depth of the beading portion (B) of the cylindrical battery cell (C).

6. The electrolyte impregnation device according to any one of claims 1 to 5, comprising:
a plurality of battery cell fixing devices (10) according to any one of claims 1 to 5, respectively configured to be coupled to a plurality of cylindrical battery cells (C).

7. The electrolyte impregnation device according to claim 6, further comprising:
a vibration source (30) connected to the battery cell fixing device (10).

8. The electrolyte impregnation device according to claim 7,
wherein the vibration source (30) is provided as many as the number of the holder units (100, 100A, 100B, 100C) provided in one battery cell fixing device (10).

9. The electrolyte impregnation device according to claim 6,
wherein the holder body (110) is disposed such that one end located close to an area where the beading portion (B) is formed, among both ends of the cylindrical battery cell (C) in a height direction, faces the rotation axis.

10. The electrolyte impregnation device according to claim 7,
wherein the rotation axis is parallel to the ground.

11. The electrolyte impregnation device according to claim 10,
wherein the vibration source (30) is configured to be connected to the battery cell fixing device (10) after the rotator (20) stops driving.

12. The electrolyte impregnation device according to claim 11,
wherein the rotator (20) is configured to restart driving after the vibration source (30) stops driving and the connection between the vibration source (30) and the battery cell fixing device (10) is released.

13. The electrolyte impregnation device according to claim 12,
wherein the plurality of battery cell fixing devices (10) are configured to be alternately connected to the vibration source (30).

14. The electrolyte impregnation device according to claim 13,
wherein the battery cell fixing device (10) is configured to be connected to the vibration source (30) at a position where one end located close to an area where the beading portion (B) is formed, among both ends of the cylindrical battery cell (C) coupled to the battery cell fixing device (10) in a height direction, faces the ground.

## Patentansprüche

1. Elektrolytimprägnierungsvorrichtung (1) aufweisend mindestens eine Batteriezellenbefestigungsvorrichtung (10), wobei die mindestens eine Batteriezellenbefestigungsvorrichtung (10) aufweist:
mehrere Haltereinheiten (100, 100A, 100B, 100C), die konfiguriert sind, mit einer zylindrischen Batteriezelle (C) entlang eines Außenumfangs der zylindrischen Batteriezelle (C) gekoppelt zu werden,
wobei jede der mehreren Haltereinheiten (100, 100A, 100B, 100C) aufweist:
einen Halterkörper (110), der konfiguriert ist, einen Teil des Außenumfangs der zylindrischen Batteriezelle (C) zu bedecken; und
eine Sickenbefestigungseinheit (120), die konfiguriert ist, in Richtung der zylindrischen Batteriezelle (C) von dem Halterkörper (110) vorzustehen und in einen Sickenabschnitt (B) eingesetzt zu werden, der durch Einpressen des Außenumfangs der zylindrischen Batteriezelle (C) gebildet wird; und
eine Vibrationsquellenverbindungseinheit (200), die an einer Außenfläche des Halterkörpers (110) von mindestens einer der mehreren Haltereinheiten (100, 100A, 100B, 100C) vorgesehen ist und konfiguriert ist, mit einer Vibrationsquelle (30) verbunden zu werden;
wobei die Elektrolytimprägnierungsvorrichtung (1) ferner einen Rotator (20) aufweist, der konfiguriert ist, die mehreren Haltereinheiten (100, 100A, 100B, 100C) bezüglich einer vorbestimmten Drehachse zu drehen.

2. Elektrolytimprägnierungsvorrichtung nach Anspruch 1,
wobei die mindestens eine Batteriezellenbefestigungsvorrichtung (10) ferner aufweist:
eine Halterbefestigungseinheit (300), die konfiguriert ist, benachbarte Haltereinheiten (100, 100A, 100B, 100C) miteinander zu koppeln.

3. Elektrolytimprägnierungsvorrichtung nach Anspruch 1,
wobei die Sickenbefestigungseinheit (120) eine vorstehende Länge aufweist, die einer Einpresstiefe des Sickenabschnitts (B) entspricht.

4. Elektrolytimprägnierungsvorrichtung nach Anspruch 1,
wobei die Sickenbefestigungseinheit (120) konfiguriert ist, sich entlang einer radialen Richtung der zylindrischen Batteriezelle (C) von dem Halterkörper (110) zu bewegen und befestigt zu werden.

5. Elektrolytimprägnierungsvorrichtung nach Anspruch 4,
wobei die Sickenbefestigungseinheit (120) konfiguriert ist, in einem Zustand befestigt zu werden, in dem sie von dem Halterkörper (110) um eine Länge gezogen wird, die einer Einpresstiefe des Sickenabschnitts (B) der zylindrischen Batteriezelle (C) entspricht.

6. Elektrolytimprägnierungsvorrichtung nach einem der Ansprüche 1 bis 5, aufweisend:
mehrere Batteriezellenbefestigungsvorrichtungen (10) nach einem der Ansprüche 1 bis 5, die jeweils konfiguriert sind, mit mehreren zylindrischen Batteriezellen (C) gekoppelt zu werden.

7. Elektrolytimprägnierungsvorrichtung nach Anspruch 6, ferner aufweisend:
eine Vibrationsquelle (30), die mit der Batteriezellenbefestigungsvorrichtung (10) verbunden ist.

8. Elektrolytimprägnierungsvorrichtung nach Anspruch 7,
wobei die Vibrationsquelle (30) so oft wie die Anzahl der Haltereinheiten (100, 100A, 100B, 100C), die in einer Batteriezellenbefestigungsvorrichtung (10) vorgesehen sind, vorgesehen ist.

9. Elektrolytimprägnierungsvorrichtung nach Anspruch 6,
wobei der Halterkörper (110) so angeordnet ist, dass ein Ende, das sich nahe einem Bereich befindet, in dem der Sickenabschnitt (B) gebildet ist, unter beiden Enden der zylindrischen Batteriezelle (C) in einer Höhenrichtung der Drehachse zugewandt ist.

10. Elektrolytimprägnierungsvorrichtung nach Anspruch 7,
wobei die Drehachse parallel zu dem Boden ist.

11. Elektrolytimprägnierungsvorrichtung nach Anspruch 10,
wobei die Vibrationsquelle (30) konfiguriert ist, mit der Batteriezellenbefestigungsvorrichtung (10) verbunden zu werden, nachdem der Rotator (20) das Antreiben stoppt.

12. Elektrolytimprägnierungsvorrichtung nach Anspruch 11,
wobei der Rotator (20) konfiguriert ist, das Antreiben neu zu starten, nachdem die Vibrationsquelle (30) das Antreiben stoppt und die Verbindung zwischen der Vibrationsquelle (30) und der Batteriezellenbefestigungsvorrichtung (10) gelöst ist.

13. Elektrolytimprägnierungsvorrichtung nach Anspruch 12,
wobei die mehreren Batteriezellenbefestigungsvorrichtungen (10) konfiguriert sind, abwechselnd mit der Vibrationsquelle (30) verbunden zu werden.

14. Elektrolytimprägnierungsvorrichtung nach Anspruch 13,
wobei die Batteriezellenbefestigungsvorrichtung (10) konfiguriert ist, mit der Vibrationsquelle (30) an einer Position verbunden zu werden, an der ein Ende, das sich nahe einem Bereich befindet, in dem der Sickenabschnitt (B) gebildet ist, von den beiden Enden der zylindrischen Batteriezelle (C), die mit der Batteriezellenbefestigungsvorrichtung (10) in einer Höhenrichtung gekoppelt ist, dem Boden zugewandt ist.

## Revendications

1. Dispositif d'imprégnation d'électrolyte (1) comprenant au moins un dispositif de fixation de cellule de batterie (10), l'au moins un dispositif de fixation de cellule de batterie (10) comprenant :
une pluralité d'organes de retenue (100, 100A, 100B, 100C) configurés pour être couplés à une cellule de batterie (C) le long d'une circonférence extérieure de la cellule de batterie cylindrique (C),
chacun de la pluralité d'organes de retenue (100, 100A, 100B, 100C) comprenant :
un corps de retenue (110) configuré pour couvrir une partie de la circonférence extérieure de la cellule de batterie cylindrique (C) ; et
un dispositif de fixation de moulure (120) configuré pour faire saillie vers la cellule de batterie cylindrique (C) depuis le corps de retenue (110), et pour être inséré dans une partie de moulure (B) formée en enfonçant la circonférence extérieure de la cellule de batterie cylindrique (C) ; et
un dispositif de connexion de la source de vibrations (200) agencé sur une surface extérieure du corps de retenue (110) d'au moins un de la pluralité d'organes de retenue (100, 100A, 100B, 100C), et configuré pour être connecté à une source de vibration (30) ;
le dispositif d'imprégnation d'électrolyte (1) comprenant en outre un rotateur (20) configuré pour faire tourner la pluralité d'organes de retenue (100, 100A, 100B, 100C) sur la base d'un axe de rotation prédéterminé.

2. Dispositif d'imprégnation d'électrolyte selon la revendication 1,
l'au moins un dispositif de fixation de cellule de batterie (10) comprenant en outre :
un dispositif de fixation d'organe de retenue (300) configuré pour coupler l'un à l'autre des organes de retenue (100, 100A, 100B, 100C) voisins.

3. Dispositif d'imprégnation d'électrolyte selon la revendication 1,
la longueur saillante du dispositif de fixation de moulure (120) correspondant à une profondeur d'enfoncement de la partie de moulure (B).

4. Dispositif d'imprégnation d'électrolyte selon la revendication 1,
le dispositif de fixation de moulure (120) étant configuré pour se déplacer dans un sens radial de la cellule de batterie cylindrique (C) depuis le corps de retenue (110) et être fixé.

5. Dispositif d'imprégnation d'électrolyte selon la revendication 4,
le dispositif de fixation de moulure (120) étant configuré pour être fixé dans un état comportant son extraction du corps de retenue (110) d'une longueur correspondant à une profondeur d'enfoncement de la partie de moulure (B) de la cellule de batterie cylindrique (C).

6. Dispositif d'imprégnation d'électrolyte selon une quelconque des revendications 1 à 5, comprenant :
une pluralité de dispositifs de fixation de cellule de batterie (10) selon une quelconque des revendications 1 à 5, configurés respectivement pour être couplés à une pluralité de cellules de batterie cylindrique (C).

7. Dispositif d'imprégnation d'électrolyte selon la revendication 6, comprenant en outre :
une source de vibrations (30) connectée au dispositif de fixation de cellule de batterie (10).

8. Dispositif d'imprégnation d'électrolyte selon la revendication 7,
la source de vibrations (30) étant pourvue dans le même nombre que le nombre d'organes de retenue (100, 100A, 100B, 100C) agencés dans un dispositif de fixation de cellule de batterie (10).

9. Dispositif d'imprégnation d'électrolyte selon la revendication 6,
le corps de retenue (110) étant disposé de sorte qu'un bout situé à proximité d'une zone où est formée la partie de moulure (B), parmi les deux bouts de la cellule de batterie cylindrique (C) dans le sens de la hauteur, se trouve face à l'axe de rotation.

10. Dispositif d'imprégnation d'électrolyte selon la revendication 7,
l'axe de rotation étant parallèle au sol.

11. Dispositif d'imprégnation d'électrolyte selon la revendication 10,
la source de vibrations (30) étant configurée pour être connectée au dispositif de fixation de cellule de batterie (10) lorsque le rotateur (20) cesse d'entraîner.

12. Dispositif d'imprégnation d'électrolyte selon la revendication 11,
le rotateur (20) étant configuré pour redémarrer l'entraînement lorsque la source de vibrations (30) cesse d'entraîner, et la connexion entre la source de vibrations (30) et le dispositif de fixation de cellule de batterie (10) est libérée.

13. Dispositif d'imprégnation d'électrolyte selon la revendication 12,
la pluralité de dispositifs de fixation de cellule de batterie (10) étant configurés pour être connectés en alternance à la source de vibrations (30).

14. Dispositif d'imprégnation d'électrolyte selon la revendication 13,
le dispositif de fixation de cellule de batterie (10) étant configuré pour être connecté à la source de vibrations (30) dans une position où un bout situé près d'une zone où est formée la partie de moulure (B), parmi les deux bouts de la cellule de batterie cylindrique (C) couplés au dispositif de fixation de cellule de batterie (10) dans un sens de la hauteur, fait face au sol.
